# EUROPEAN PATENT APPLICATION

(11) **EP 3 400 802 A1**
(43) Date of publication of application: **14.11.2018**
(21) Application number: 17169852.5
(22) Date of filing: 08.05.2017
(51) Int. Cl.: A21B 3/04, F24C 7/08, G05D 23/19

(54) **METHOD FOR CONTROLLING A COOKING PROCESS IN A COOKING OVEN**

(71) Applicant: ELECTROLUX APPLIANCES AKTIEBOLAG, 105 45 Stockholm (SE)
(72) Inventor: LY, Chan, 91541 Rothenburg o.d.T. (DE); BRENZ, Reiner, 91541 Rothenburg ob der Tauber (DE); SPECHT, Trevor, 91541 Rothenburg ob der Tauber (DE)
(74) Representative: Electrolux Group Patents

(57) **Abstract**

The present invention relates to a method for controlling a cooking process in an oven cavity of a cooking oven, wherein food stuff is arranged inside the oven cavity. The method comprises a time control mode (10) in the beginning of said method. The time control mode (10) defines the transmission of heating energy (E) to the oven cavity as function of the time (t) during said time control mode (10). The function of the transmitted heating energy (E) in dependence of the time (t) bases on empiric and/or calculated data. The time control mode (10) includes a heating up phase (14) and a thermal inertia phase (18). The time control mode (10) starts with the heating up phase (14). During the heating up phase (14) the oven cavity is heated up by activating at least one heating element of said oven cavity. The heating up phase (14) is stopped, after a predetermined heating energy has been transmitted to the oven cavity. The predetermined heating energy depends on a set core temperature of the food stuff. During the thermal inertia phase (18) all heating elements of the oven cavity are deactivated. The thermal inertia phase (18) is stopped, after a core temperature of the food stuff in the oven cavity and the temperature in the oven cavity has equalised to each other or the set core temperature of said food stuff has been reached.

## Description

The present invention relates to a method for controlling a cooking process in an oven cavity of a cooking oven, in particular a domestic cooking oven. Further, the present invention relates to a cooking oven with at least one oven cavity adapted for said method.

A method for heating up food stuff inside an oven cavity of a cooking oven may be controlled by a cooking program basing on an automatic algorithm. Usually, that algorithm has been programmed by the manufacturer of the cooking oven. Further, said algorithm has been setup for transferring heating energy to specified food stuff or to a group of specified food stuffs, which require the same amount of total heating energy.

The cooking ovens according to the prior art control the heating of food stuff indirectly, wherein primarily the heating of the oven cavity of the cooking oven is controlled. That is achieved by controlling the heating elements of the oven cavity in dependency of the temperature of the oven cavity. Practically, the oven cavity is heated up to a temperature that is chosen according to the type of the food stuff, wherein a food stuff specific oven temperature needs to be known or to be looked-up by the user, e.g. in a recipe or oven manual. The food stuff is heated up inside the heated oven cavity for some time at said food stuff specific oven temperature until it is considered to be suitably cooked. It is also known that a suitable target core temperature of the food stuff is monitored by a temperature sensor needle, wherein the heating of the oven cavity is automatically controlled in dependence of the signal from said temperature sensor needle.

The control methods according to the prior art substantially base on the detected temperatures in the oven cavity. Various attempts have been made already in order to reduce the energy consumption of an oven cavity controlled in that way. However, it has become clear now that the concept of handling the energy consumption of the heated oven cavity on the bases of the detected temperature cannot fulfil future legal restrictions on energy consumption in this field, in particular the A++ and A+++ energy labels.

It is an object of the present invention to provide a method for controlling a cooking process in an oven cavity of a cooking oven, which reduces the energy consumption by low complexity.

The object of the present invention is achieved by the method for controlling a cooking process in an oven cavity of a cooking oven according to claim 1.

According to the present invention a method for controlling a cooking process in an oven cavity of a cooking oven is provided, wherein:
- food stuff is arranged inside the oven cavity,
- the method comprises a time control mode in the beginning of said method,
- the time control mode defines the transmission of heating energy to the oven cavity as function of the time during said time control mode,
- the function of the transmitted heating energy in dependence of the time bases on empiric and/or calculated data,
- the time control mode includes a heating up phase and a thermal inertia phase,
- the time control mode starts with the heating up phase,
- during the heating up phase the oven cavity is heated up by activating at least one heating element of said oven cavity,
- the heating up phase is stopped, after a predetermined heating energy has been transmitted to the oven cavity,
- the predetermined heating energy depends on a set core temperature of the food stuff,
- during the thermal inertia phase all heating elements of the oven cavity are deactivated, and
- the thermal inertia phase is stopped, after a core temperature of the food stuff in the oven cavity and the temperature in the oven cavity has equalised to each other or the set core temperature of said food stuff has been reached.

The main idea of the present invention is the time control mode with the heating up phase and the thermal inertia phase, wherein the transmission of heating energy to the oven cavity depends on the time. The activation and deactivation of the heating element(s) during the time control mode is predetermined by a program and/or an algorithm and independent of any detected parameters. The program or algorithm bases on empiric and/or calculated data, but not on any detected parameters. During the heating up phase a big amount of heating energy is transmitted to the oven cavity, while a small amount of heating energy is absorbed by the food stuff. During the thermal inertia phase heating energy is transmitted from the oven cavity to the food stuff, while the heating elements are deactivated. The combination of the heating up phase and the thermal inertia phase reduces the energy consumption.

For example, the predetermined heating energy transmitted to the oven cavity during the heating up phase depends on the set core temperature of the food stuff in the oven cavity, when the core of the food stuff and the oven cavity are in thermal equilibrium.

In particular, the time control mode includes a thermal cycling phase, wherein said thermal cycling phase is performed after the heating up phase and before the thermal inertia phase, and wherein the at least one heating element of said oven cavity is alternatingly deactivated and activated.

In this case, the predetermined heating energy transmitted to the oven cavity during the heating up phase and the thermal cycling phase may depend on the set core temperature of the food stuff in the oven cavity, when the core of the food stuff and the oven cavity are in thermal equilibrium.

Preferably, the at least one heating element is continuously activated during the heating up phase.

Further, the relation of the transmitted heating energy and the time may depend on the mass and kind of food stuff, the volume and the thermal capacity of the oven cavity and/or the insulation of the cooking oven. If the mass of the food stuff is increased, then the number of the cycling phases depends on the extent of said increase. For example, if the increase of the mass is small, e.g. about 50 %, then the duration of the cycling phase would increase. Further, if the increase of the mass would be large, e.g. about 100 %, then an additional cycling phase would be required. An increase of the thermal capacity of the oven cavity requires an increase of the duration of the cycling phases, wherein the number of said cycling phases does not be changed.

An increase of the volume of the oven cavity results in a larger thermal capacity of said oven cavity, if the same material and thickness of the cavity wall is used. Thus, the increase of the volume of the oven cavity requires an increase of the duration of the cycling phases, wherein the number of said cycling phases is not changed. If the insulation of the oven cavity is improved, then the temperature in the centre of said oven cavity increases, but a change of the duration and/or number of the cycling phases is not necessary.

Moreover, the numbers of activations and deactivations of the at least one heating element of the oven cavity may depend on the mass and kind of food stuff, the volume and the thermal capacity of the oven cavity and/or the insulation of the cooking oven.

Additionally, the durations of the activated and deactivated states of the at least one heating element of the oven cavity may depend on the mass and kind of food stuff, the volume and the thermal capacity of the oven cavity and/or the insulation of the cooking oven. If the mass of the food stuff is increased, then the ratio of the durations of the activated and deactivated states depends on the extent of said increase. For example, if the increase of the mass is small, e.g. about 50 %, then the ratio of the durations would increase. Further, if the increase of the mass would be large, e.g. about 100 %, then the additional cycling phase would be required. The increase of the thermal capacity of the oven cavity requires an increase of the total duration of the cycling phases.

The increase of the volume of the oven cavity results in a larger thermal capacity of said oven cavity, if the same material and thickness of the cavity wall is used. Thus, the increase of the volume of the oven cavity requires an increase of the ratio of the durations of the cycling phases. If the insulation of the oven cavity is improved, then the temperature in the centre of said oven cavity increases, but a change of the ratio of the durations is not required.

The ratio of the durations of the activated and deactivated states is a tuning of the cooking process and can be confirmed by a test.

Alternatively or additionally, the core temperature of the food stuff may be detected by at least one food probe.

Furthermore, the method comprises a temperature control mode, wherein temperature control mode is started, after the time control mode has been finished. The temperature control mode bases on detected temperature values.

Preferably, the control of the at least one heating element in the temperature control mode depends on at least one temperature detected in the oven cavity and/or in the food stuff.

Further, the present invention relates to a cooking oven with at least one an oven cavity, wherein the cooking oven is adapted for the method mentioned above.

Novel and inventive features of the present invention are set forth in the appended claims.

The present invention will be described in further detail with reference to the drawing, in which
- FIG 1: illustrates schematic diagrams of the temperature and the energy as functions of time during a cooking process in an oven cavity controlled by a method according to a preferred embodiment of the present invention, and
- FIG 2: illustrates schematic diagrams of temperatures as functions of time during a thermal cycling phase according to the preferred embodiment of the present invention.

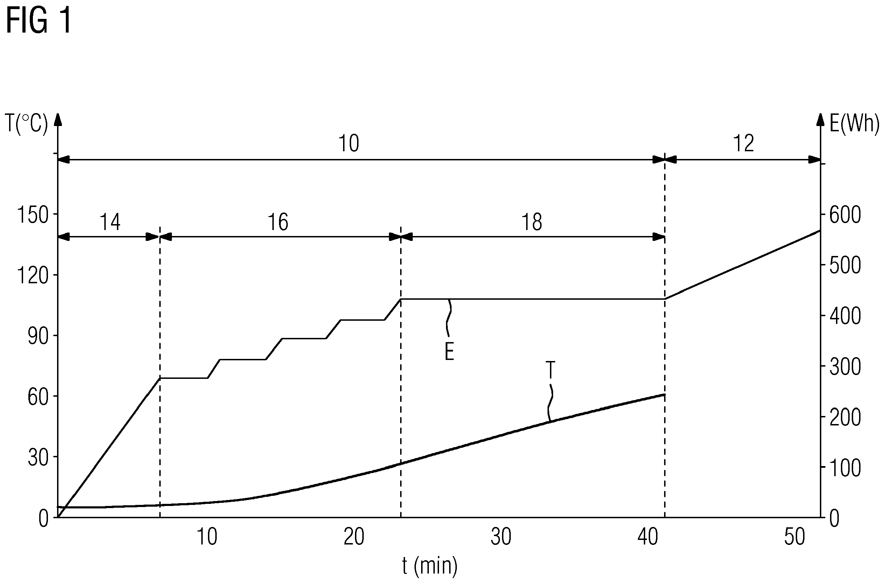

FIG 1 illustrates schematic diagrams of the temperature T and the energy E as functions of time t during a cooking process in an oven cavity controlled by a method according to a preferred embodiment of the present invention. The temperature T relates to a core temperature of a food stuff inside the oven cavity.

The method for controlling the cooking process comprises a time control mode 10 and a temperature control mode 12. The time control mode 10 controls a first part of the cooking process, while the temperature control mode 12 controls a second part of said cooking process. In turn, the time control mode 10 is subdivided into three subsequent phases. The time control mode 10 includes a heating up phase 14, a thermal cycling phase 16 and a thermal inertia phase 18. The time control mode 10 includes a time based heating algorithm, while the temperature control mode 12 controls the second part of the cooking process in dependence of the temperature.

In this example, the first fifty-one minutes of the cooking process are shown, wherein the time controlled second part of said cooking process 10 takes forty-one minutes. Therefrom the heating up phase 14 takes seven minutes, the thermal cycling phase 16 takes sixteen minutes and the thermal inertia phase 18 takes eighteen minutes.

The time based heating algorithm of the time control mode 10 is independent from the temperature. The time based heating algorithm is programmed by the manufacturer of the cooking oven. Preferably, the heating algorithm is programmed by the manufacturer on the basis of tests performed previously with the cooking oven. Further, the heating algorithm may be programmed by the manufacturer on the basis of tests performed with different specified food stuffs inside said cooking oven. The heating algorithm is determined empirically by the manufacturer of the cooking oven for the oven cavity, food stuff, predetermined target core temperature and heating mode.

In the beginning of the cooking process an amount of heating energy is determined in dependence of the properties of the cooking oven, the amount and kind of food stuff and the predetermined target temperature of the core of the food stuff, i.e. a central portion of said food stuff.

During the heating up phase 14 the heating elements of the cooking oven are continuously activated without any interruption or modulation. Preferably, the heating elements of the cooking oven run at maximum heating power. The heating up phase 14 allows that the heating energy is transmitted as fast as possible to the oven cavity. During the heating up phase 14 the oven cavity absorbs the majority of energy.

During the thermal cycling phase 16 the heating elements are alternatingly deactivated and activated. In this example, the heating elements are alternatingly deactivated for three minutes and then activated for one minute. In particular, the thermal cycling phase 16 allows a heat exchange from the oven cavity to the food stuff. The thermal cycling phase 16 improves the efficiency of the heating method according to the present invention, wherein the target core temperature of the food stuff is reached relative fast.

During the thermal inertia phase 18 the heating elements are deactivated. Thus, no further energy is transmitted to the oven cavity during said thermal inertia phase 18. In particular, the thermal inertia phase 18 allows a heat exchange from the oven cavity to the core of the food stuff. Further, the thermal inertia phase 18 allows a heat exchange from outer portions of the food stuff to the core of said food stuff. The duration of the thermal inertia phase 18 either has been empirically determined by several tests or depends on the core temperature detected by a temperature sensor inserted in the food stuff. In the latter case, the duration of the thermal inertia phase 18 need not to be determined and programmed by the manufacturer of the cooking oven.

Alternatively, the thermal cycling phase 16 is skipped, so that the thermal inertia phase 18 is performed directly after the heating up phase 14. In this case, the full amount of heating energy is transmitted into the oven cavity during the heating up phase 14. There is much more heating energy transmitted into the oven cavity than the food stuff can absorb during the heating up phase 14. Therefore, the losses are bigger as in the method mentioned above, in which the partial amount of heating energy is transmitted into the oven cavity during the heating up phase 14 and the residual amount of heating energy is transmitted into the oven cavity during the thermal cycling phase 16. When the food stuff reaches the predetermined core temperature, then the temperature in the oven cavity lower and the duration of the heating up phase 14 is longer than in the method mentioned above.

On the one hand, the oven cavity should be heated up with power as much as possible during the heating up phase 14. On the other hand, if too much power is used during the heating up phase 14, then an energy saturation of the oven cavity is reached before the end of energizing the heating element, so that the transmitted energy cannot be used completely.

Thus, according to the preferred embodiment, the time controlled section 10 includes the heating up phase 14, the thermal cycling phase 16 and the thermal inertia phase 18, wherein the amount of heating energy in the heating up phase 14 is limited.

For example, the preferred embodiment including the thermal cycling phase 16 is advantageous, if the food stuff is ready cooked for consumption already at the end of the heating up phase 14. Further, the thermal cycling phase 16 is advantageous in cooking situations, wherein the total cooking process requires further heating of the food stuff after the heating up phase 16, e.g. when the food stuff shall not only be cooked to a suitable degree, but additionally shall receive a browning.

The method according to the present invention relates to any heating methods, which comprise the initial heating up phase 14, the thermal inertia phase 18 and optionally the thermal cycling phase 16 between said heating up phase 14 and thermal inertia phase 18. The method according to the present invention is adapted, that at its end the food stuff has reached the desired core temperature. The present invention is applicable to any heating methods comprising further following steps of treating the food stuff inside the oven cavity, e.g. further heating in any heating mode, browning or a further thermal inertia phase.

The time based heating algorithm depends on the properties of the cooking oven. Typically, the volume of the oven cavity is between forty and seventy litres, while the mass of said oven cavity is between 9 kg and 11 kg.

In the following empiric investigations of the inventors are described, wherein a large oven cavity and a small oven cavity according to the prior art have been used. In this example, the large oven cavity has a volume of 65 litres, while the small oven cavity has a volume of 43 litres. In these experiments, a water-saturated construction test brick having a size of 230 mm x 114mm x 64 mm and a dry weight of 0.92 kg has been used. Said test brick is made of clay used for forming fired bricks, e.g. diatomite. The test brick comprises two drilled holes for receiving temperature sensor needles and is arranged in the centre of the oven cavity. The test brick is used as a model of food stuff. As heating mode only a forced convection heating mode has been used in the experiments. Said convection heating mode is performed by simultaneously activating a ring heating element arranged between a cavity rear wall and a fan cover arranged in front thereof and a corresponding convection fan enclosed by said ring heating element.

Typically, in the experiments an available heating energy amount of 360 Wh for the large oven cavity is used. Said heating energy amount corresponding to an A+++ energy level maximum amount of 380 Wh minus a safety margin of 20 Wh. In contrast, the heating energy amount of an A++ energy label would be 500 Wh in this case. For the small oven cavity the heating energy amount is 300 Wh to the A+++ energy level maximum amount of 320 Wh. In this case, the A++ energy label would be 430 Wh.

In order to reach a target core temperature of 55°C of the brick relative to the initial temperature, the ring heating element and the convection fan are allowed to run simultaneously during the heating up phase 14 for nine minutes in the large oven cavity model and for twelve minutes in the small oven cavity model in A+++ energy level. In contrast, the duration of the heating up phase 14 in A++ energy level would be twelve minutes for the large oven cavity model and sixteen minutes for the small oven cavity model. Typically, the initial temperature of the food stuff is between 4°C and 6°C.

During the heating up phase 14 the heating element was operated continuously without any interruption or modulation, so that the maximum energy is generated. The longer total time available for running the heating element in the small oven cavity model is possible, because the energy requirement is different for the smaller oven cavity and the heating element has a lower power, namely 1650 W. In contrast, the power of the heating element for the large cavity is 2400 W. In order to determine the total amount of heating energy that is available for heating the food stuff in practice, the example power of the ring heating element is 2400 W for the large oven cavity model, while the example power of the ring heating element for the small oven cavity model is 1650 W. The energy consumption is 360 Wh for the large oven cavity model in A+++ energy level for nine minutes. Similarly, for the small oven cavity model the energy consumption is 310 Wh with the heating element of 1650 W for twelve minutes. However, it should be considered that further small loads such as the convection fan also contributes to the energy consumption, but this would only be approximately 15 Wh.

In the following, examples of the method according to the present invention are described as a process flow.
1. Using the time based heating algorithm to heat the food stuff to the predetermined core temperature in the optimum method.
   1.1. Heating up the thermal mass of the system, i.e. oven cavity, oven door and insulation, for a certain time, wherein a small amount of heating energy is transmitted to the food stuff, and wherein the first heating phase is the longest time. For example, the duration of the first heating phase is seven minutes for the A+++ energy level and the large oven cavity.
   1.2. Turning off the heating element for a certain time, wherein the hot air fan is activated.
   1.3. Turning on the heating element for a certain time, wherein the hot air fan is activated.
   1.4. Repeating the steps 1.2 and 1.3 until the predetermined amount of energy, which is required or defined, has been transmitted, wherein the hot air fan is always on.
   1.5. Using the residual thermal energy from the system to increase the core temperature of the food stuff.
   1.6. Using the thermal mass of the food stuff in order to absorb the thermal energy from the system.
   1.7. Using the cooling fan in the second and subsequent heating phases.
   1.8. For the A++++ energy level, the cooling fan is not used at all.
   1.9. After a certain time the temperature control mode 12 is switched on basing on the predetermined temperature. For example, the temperature control mode 12 is performed for browning the food stuff after increasing the core temperature in steps 1.1 to 1.5 and for food stuff, which requires a longer cooking time than the duration of the time control mode 10. The temperature control mode 12 continues the cooking process until the food stuff is ready. Cooking the food stuff according to steps 1.1 to 1.8 is the most efficient way to achieve the cooking result.
      Alternatively, a food probe for detecting the core temperature of the food stuff is used.
2. Using the food probe for the steps 1.1 to 1.8.
   2.1. Setting the core temperature for the food stuff with the food probe inserted by the user.
   2.2. Heating up the thermal mass of the system, i.e. oven cavity, oven door, insulation, for a certain time, wherein a small amount of heating energy is transmitted to the food stuff. The first heating phase is the longest time, e.g. for the A+++ energy level and the large oven cavity about seven minutes.
   2.3. Turning off the heating element for a certain time, wherein the hot air fan is always on.
   2.4. Turning on the heating element for a certain time, wherein the hot air fan is always on.
   2.5. Repeating steps 2.2 to 2.4 until the amount of energy, which is required and/or defined, is reached, wherein the hot air fan is always on.
   2.6. Heating up the system per steps 2.2 to 2.5 until the core temperature of the food stuff reaches a predetermined percentage of the set core temperature.
   2.7. Using the thermal mass of the food stuff to absorb the thermal energy from the system.
   2.8. If the core temperature value is detected to drop relative to the defined temperature path, then a boost energy load is added to obtain the set core temperature.
      This method saves energy relative to the current food probe method by utilizing the thermal energy of the system in order to heat up the thermal mass of the food. The current method continuously puts in energy into the system until the core temperature is reached.
3. Another use of this energy saving concept is when you know the food type and mass
   3.1. Heating up the thermal mass of the system, i.e. oven cavity, oven door, insulation, wherein a small amount of energy is transmitted to the food stuff. The first heating phase is the longest time for the A+++ energy level and the large oven cavity is about seven minutes.
   3.2. Turning off the heating element for a certain time, wherein the hot air fan is always on.
   3.3. Turning on the heating element for a certain time, wherein the hot air fan is always on.
   3.4. Repeating cycle steps 2.2 to 2.4 until the amount of energy, which is required and/or defined, has been reach, wherein the hot air fan is always on.
   3.5. Knowing the type and mass of the food stuff, the time to stop the heating cycle can be determined in order to ensure that the thermal mass of the food stuff still obtains the core temperature.

The present invention can be generalized beyond the above examples. The invention replaces the prior art concept, wherein the energy consumption of the oven cavity is indirectly managed by controlling the temperature in the oven cavity rather than focusing on the uptake of the provided heating energy by the food stuff. Divergently, the present invention proposes to control the energy consumption of the oven cavity via an algorithm that splits up on/off of the heating elements during the predetermined total heating time specific for the food stuff. Thus, the specific heating time and its split up replaces the food stuff specific oven cavity temperature of the prior art cooking ovens.

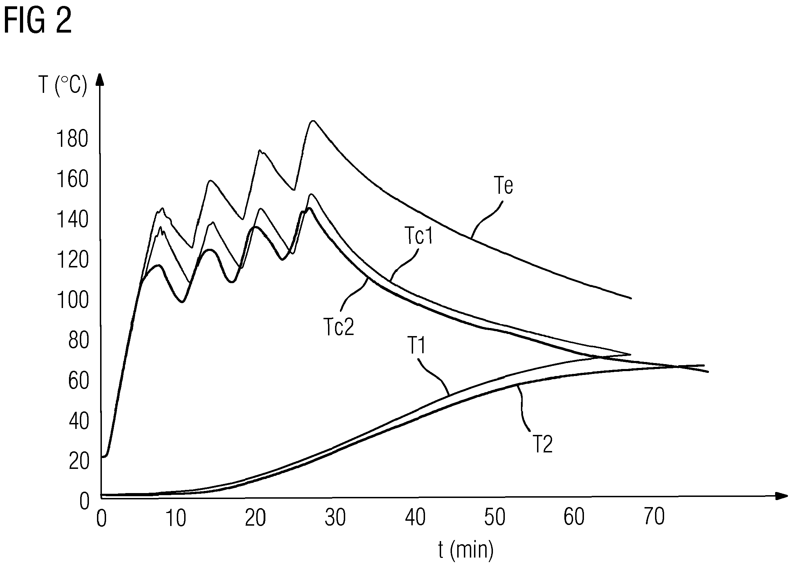

FIG 2 illustrates schematic diagrams of temperatures T1, T2, Tc1, Tc2 and Te as functions of time for two time control modes 10 according to the preferred embodiment of the present invention. The diagrams clarify the behaviour of the temperatures T1, T2, Tc1, Tc2 and Te during the heating up phase 14, the thermal cycling phase 16 and the thermal inertia phase 18 for the two different time control modes 10.

A temperature of the empty cavity Te, a first core temperature T1 and a first cavity temperature Tc1 relate to a time control mode 10, in which the duration of the heating up phase 14 is eleven minutes. A second core temperature T2 and a second cavity temperature Tc2 relate to a time control mode 10, in which the duration of the heating up phase 14 is twelve minutes.

During the heating phases 16 the temperature of the empty cavity Te, the first cavity temperature Tc1 and the second cavity temperature Tc2 increase rapidly, while the first core temperature T1 and the second core temperature T2 increase slowly. During the thermal cycling phase 16 the temperature of the empty cavity Te, the first cavity temperature Tc1 and the second cavity temperature Tc2 increase and decrease alternatingly, wherein the increasing is faster that the decreasing. Thus, the temperature of the empty cavity Te, the first cavity temperature Tc1 and the second cavity temperature Tc2 effectively increase during the thermal cycling phase 16. Further, the first core temperature T1 and the second core temperature T2 increase slowly during the thermal cycling phase 16.

During the thermal inertia phase 18 the temperature of the empty cavity Te, the first cavity temperature Tc1 and the second cavity temperature Tc2 decrease, while the first core temperature T1 and the second core temperature T2 increase. The first core temperature T1 and the first cavity temperature Tc1 become identical after fifty-nine minutes. In contrast, the second core temperature T2 and the second cavity temperature Tc2 become identical after sixty-six minutes. Thus, the shorter heating up phase 14 results in a longer duration until the thermal equilibrium of the oven cavity and the food stuff is obtained.

The thermal cycling phase 16 mentioned above provides the increased energy efficiency. The time control mode 10 without the thermal cycling phase 16, wherein the available energy is essentially transmitted to the oven cavity during the heating up phase 14, would result in an unduly long duration of the overall cooking process. The initial heating up phase 14 would be directly followed by thermal inertia phase 18 until the target core temperature of the food stuff has been reached. In this case, the duration of the heating up phase 14 would be maximal. If the oven cavity would be large, then the heating up phase 14 would be turned off after seven to nine minutes. If the oven cavity would be small, then the heating up phase 14 would be turned off after eight to ten minutes. For example, the large oven cavity is supplied by a 2400 Wh heating element, while the small oven cavity may be supplied by a 1650 Wh heating element, wherein the oven cavity is provided for the A++ energy level. The number of switching on and off the heating power during the thermal cycling phase 16 is chosen according to the total heating time available in the respective cavity model. Thus, in the large cavity model the total heating time of thirteen minutes is most effectively split up into two or three heating periods including the initial heating up phase during the thermal cycling phase 16, while in the small cavity model the total heating time of sixteen minutes is most effectively split up into three to five, preferably four, heating periods. For example, in the large cavity model the heating up phase is seven minutes and three cycling phases, while in the small cavity model the heating up phase is eight minutes and four cycling phases. It has been found that additional heating periods during the thermal cycling phase 16 reduces the efficiency, since the duration for reaching the target core temperature increases. The total heating times mentioned above relate to the A++ energy level only, while said total heating times for the A+++ energy level would be smaller.

The invention also relates to an automatic controlling of the cooking oven by food stuff or recipe-specific cooking programs, which comprise corresponding algorithms programmed or updateable by the manufacturer of the cooking oven and spare the user of the cooking oven the need to determine himself any specific oven temperature.

The present invention allows the definition of an energy mode, which may be activated by a button. Said energy mode alters the method for controlling a cooking process in that the cooking results remain the same, but the duration of the cooking process increases, wherein energy is saved.

Further, the present invention allows the use of the food probe for detecting the core temperature of the food stuff, wherein said core temperature may be selected. Moreover, the present invention allows a smart cooking function, wherein the food stuff and the mass are selected. The use of the food probe and the smart cooking function also alter the method for controlling the cooking process, wherein the cooking results remain the same, but the duration of the cooking process increases, so that energy is saved.

Although an illustrative embodiment of the present invention has been described herein with reference to the accompanying drawings, it is to be understood that the present invention is not limited to that precise embodiment, and that various other changes and modifications may be affected therein by one skilled in the art without departing from the scope or spirit of the invention. All such changes and modifications are intended to be included within the scope of the invention as defined by the appended claims.

### List of reference numerals

- 10: time control mode
- 12: temperature control mode
- 14: heating up phase
- 16: thermal cycling phase
- 18: thermal inertia phase

- T: core temperature
- T1: first core temperature
- T2: second core temperature
- Tc1: first cavity temperature
- Tc2: second cavity temperature
- Te: temperature of the empty cavity

## Claims

1. A method for controlling a cooking process in an oven cavity of a cooking oven, wherein:
- food stuff is arranged inside the oven cavity,
- the method comprises a time control mode (10) in the beginning of said method,
- the time control mode (10) defines the transmission of heating energy (E) to the oven cavity as function of the time (t) during said time control mode (10),
- the relation of the transmitted heating energy (E) and the time (t) bases on empiric and/or calculated data,
- the time control mode (10) includes a heating up phase (14) and a thermal inertia phase (18),
- the time control mode (10) starts with the heating up phase (14),
- during the heating up phase (14) the oven cavity is heated up by activating at least one heating element of said oven cavity,
- the heating up phase (14) is stopped, after a predetermined heating energy has been transmitted to the oven cavity,
- the predetermined heating energy depends on a set core temperature of the food stuff,
- during the thermal inertia phase (18) all heating elements of the oven cavity are deactivated, and
- the thermal inertia phase (18) is stopped, after the core temperature of the food stuff in the oven cavity and the temperature in the oven cavity has equalised to each other or a set core temperature of said food stuff has been reached.

2. The method according to claim 1,
**characterised in that**
the predetermined heating energy transmitted to the oven cavity during the heating up phase (14) depends on the set core temperature of the food stuff in the oven cavity, when the core of the food stuff and the oven cavity are in thermal equilibrium.

3. The method according to claim 1,
**characterised in that**
the time control mode (10) includes a thermal cycling phase (16), wherein said thermal cycling phase (16) is performed after the heating up phase (14) and before the thermal inertia phase (18), and wherein the at least one heating element of said oven cavity is alternatingly deactivated and activated.

4. The method according to claim 3,
**characterised in that**
the predetermined heating energy transmitted to the oven cavity during the heating up phase (14) and the thermal cycling phase (16) depends on the set core temperature of the food stuff in the oven cavity, when the core of the food stuff and the oven cavity are in thermal equilibrium.

5. The method according to any one of the preceding claims,
**characterised in that**
the at least one heating element is continuously activated during the heating up phase (14).

6. The method according to any one of the preceding claims,
**characterised in that**
the relation of the transmitted heating energy (E) and the time (t) depends on the mass and kind of food stuff, the volume and the thermal capacity of the oven cavity and/or the insulation of the cooking oven.

7. The method according to any one of the preceding claims,
**characterised in that**
the numbers of activations and deactivations of the at least one heating element of the oven cavity depends on the mass and kind of food stuff, the volume and the thermal capacity of the oven cavity and/or the insulation of the cooking oven.

8. The method according to any one of the preceding claims,
**characterised in that**
the durations of the activated and deactivated states of the at least one heating element of the oven cavity depends on the mass and kind of food stuff, the volume and the thermal capacity of the oven cavity and/or the insulation of the cooking oven.

9. The method according to any one of the preceding claims,
**characterised in that**
the core temperature of the food stuff is detected by at least one food probe.

10. The method according to any one of the preceding claims,
**characterised in that**
the method comprises a temperature control mode (12), wherein the temperature control mode (12) is started, after the time control mode (10) has been finished.

11. The method according to claim 10,
**characterised in that**
the control of the at least one heating element in the temperature control mode (12) depends on at least one temperature detected in the oven cavity and/or in the food stuff.

12. A cooking oven with at least one an oven cavity,
**characterised in that**
the cooking oven is adapted for the method according to any one of the claims 1 to 10.
